# EUROPÄISCHE PATENTANMELDUNG

(11) **EP 4 403 074 A1**
(43) Veröffentlichungstag der Anmeldung: **24.07.2024**
(21) Anmeldenummer: 23152468.7
(22) Anmeldetag: 19.01.2023
(51) Int. Cl.: A47J 31/44

(54) **VORRICHTUNG ZUM AUFSCHÄUMEN VON MILCH SOWIE HEISSGETRÄNKEBEREITER**

(71) Anmelder: Wilhelm Gronbach GmbH & Co. KG, 6342 Niederndorf (AT)
(72) Erfinder: BOCKS, Stefan, 83112 Frasdorf (DE); HÖCK, Florian, 83313 Siegsdorf (DE); MATHES, Anton, 83364 Neukirchen (DE); PETERSEN, Stefan, 83242 Reit im Winkl (DE); ENGLBERGER, Franz, 83131 Nussdorf am Inn (DE); HARLANDER, Florian, 6342 Niederrndorf (AT)
(74) Vertreter: Hofstetter, Schurack & Partner

(57) **Zusammenfassung**

Die Erfindung betrifft eine Vorrichtung (10) zum Aufschäumen von Milch (20), mit einer Dampfquelle (12) zum Bereitstellen von Dampf, mit einem von dem Dampf durchströmbaren, ersten Leitungselement (14), welches ein in ein zum Aufnehmen der Milch (20) vorgesehenes Behältnis (18) eintauchbares und von dem Dampf durchströmbares Ende (16) aufweist, mit einer elektrisch betreibbare Luftpumpe (22) zum Bereitstellen von Druckluft, und mit einem von der Druckluft durchströmbaren, zweiten Leitungselement (24), über welches die Druckluft in das erste Leitungselement (14) einleitbar ist, dessen Ende (16) von dem Dampf und von der Druckluft durchströmbar ist. Vorgesehen ist eine elektronische Recheneinrichtung (32), welche dazu ausgebildet ist, die Luftpumpe (22) anzusteuern und dadurch einen Betrieb der Luftpumpe (22) zu variieren, um dadurch eine Menge der das zweite Leitungselement (24) durchströmenden Druckluft und/oder einen Druck der Druckluft in wenigstens einem der Leitungselemente (14, 24) zu variieren.

## Beschreibung

Die Erfindung betrifft eine Vorrichtung zum Aufschäumen von Milch gemäß dem Oberbegriff des Anspruchs 1. Des Weiteren betrifft die Erfindung einen Heißgetränkebereiter. Die Erfindung betrifft auch ein Verfahren zum Aufschäumen von Milch gemäß dem Oberbegriff des Anspruchs 10.

Der EP 1 501 398 B1 ist eine Vorrichtung zum Erhitzen und Aufschäumen von Milch, insbesondere zum Zubereiten von Cappuccinos in einer Kaffeemaschine, als bekannt zu entnehmen. Vorgesehen ist ein dampferzeugender Heißwasserbereiter. Vorgesehen sind auch Fördermittel, welche mit einem offenen Ende versehen sind, wobei die Fördermittel in ein Milch enthaltendes Gefäß getaucht werden können.

Aufgabe der vorliegenden Erfindung ist es, eine Vorrichtung und ein Verfahren zum Aufschäumen von Milch sowie einen Heißgetränkebereiter mit wenigstens einer solchen Vorrichtung zu schaffen, sodass die Milch besonders einfach aufgeschäumt werden kann.

Diese Aufgabe wird durch eine Vorrichtung mit den Merkmalen des Anspruchs 1, durch einen Heißgetränkebereiter mit den Merkmalen des Anspruchs 9 und durch ein Verfahren mit den Merkmalen des Anspruchs 10 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Vorrichtung zum Aufschäumen und vorzugsweise auch zum Erhitzen von Milch. Durch das Aufschäumen der Milch kann ein durch die Milch gebildeter Milchschaum gebildet werden. Der Milchschaum kann beispielsweise zum Bereiten eines Heißgetränks wie beispielsweise eines Kaffeeheißgetränks, insbesondere eines Cappuccinos, verwendet werden. Die Vorrichtung weist eine Dampfquelle zum Bereitstellen von Dampf, insbesondere Wasserdampf, auf. Mit anderen Worten handelt es sich vorzugsweise bei der Dampfquelle um eine Wasserdampfquelle zum Bereitstellen von Wasserdampf. Wieder mit anderen Worten ausgedrückt ist mittels der Dampfquelle Dampf, insbesondere Wasserdampf, bereitstellbar. Bei der Dampfquelle kann es sich um einen sogenannten Boiler handeln. Insbesondere ist unter dem Boiler beispielsweise ein Dampfkessel zu verstehen. Ferner ist es denkbar, dass die Dampfquelle ein Durchlauferhitzer zum Erzeugen und Bereitstellen des Dampfs ist. Das Erzeugen des Dampfs wird auch als Dampferzeugung bezeichnet.

Die Vorrichtung umfasst außerdem ein erstes Leitungselement, welches von dem von der Dampfquelle bereitgestellten Dampf durchströmbar ist. Das erste Leitungselement weist ein, insbesondere offenes, Ende auf, welches von dem das erste Leitungselement durchströmenden Dampf durchströmbar ist. Somit kann beispielsweise über das Ende des ersten Leitungselements der das erste Leitungselement durchströmende Dampf aus dem ersten Leitungselement ausströmen und hierdurch insbesondere an oder in eine Umgebung des ersten Leitungselements strömen. Das offene Ende ist dabei in ein zum Aufnehmen der Milch vorgesehenes Behältnis eintauchbar oder eingetaucht. Somit kann beispielsweise zumindest ein das Ende umfassender Teil des ersten Leitungselements in das Behältnis und insbesondere in die in dem Behältnis aufgenommene Milch eingetaucht werden, insbesondere derart, dass beispielsweise das Ende unterhalb eines auch als Spiegel bezeichneten Pegels der Milch angeordnet ist. Das Behältnis kann, muss jedoch nicht notwendigerweise Bestandteil der erfindungsgemäßen Vorrichtung sein.

Die Vorrichtung umfasst des Weiteren eine elektrisch betreibbare Luftpumpe zum Bereitstellen von Druckluft. Die elektrisch betreibbare Luftpumpe wird auch einfach als Luftpumpe, Pumpe oder elektrisch betreibbare Pumpe bezeichnet. Insbesondere wird die elektrisch betreibbare Luftpumpe auch einfach als elektrische Luftpumpe oder elektrische Pumpe bezeichnet. Unter der Druckluft ist beispielsweise Luft zu verstehen, welche beispielsweise einen auch als Luftdruck bezeichneten Druck aufweist, wobei der Druck der Luft, insbesondere gegenüber dem Atmosphärendruck, vorzugsweise größer als ein bar, insbesondere größer als 1,5 bar und ganz insbesondere als zwei bar, sein kann. Insbesondere dann, wenn der Luftdruck auf den Atmosphären- beziehungsweise Umgebungsdruck bezogen wird, ist der Luftdruck ein Überdruck gegenüber dem Atmosphären- beziehungsweise Umgebungsdruck.

Die Vorrichtung weist außerdem ein zweites Leitungselement auf, welches von der von der Luftpumpe bereitgestellten oder bereitstellbaren Druckluft durchströmbar ist. Über das zweite Leitungselement kann die das zweite Leitungselement durchströmende Druckluft in das erste Leitungselement und somit in den das erste Leitungselement durchströmenden Dampf eingeleitet werden. Hierfür ist beispielsweise das zweite Leitungselement an einer Verbindungsstelle mit dem ersten Leitungselement fluidisch verbunden oder verbindbar, sodass beispielsweise die das zweite Leitungselement durchströmende Druckluft an der Verbindungsstelle aus dem zweiten Leitungselement ausströmen und in das erste Leitungselement einströmen kann. Dabei ist es beispielsweise vorgesehen, dass in Strömungsrichtung des das erste Leitungselement durchströmenden Dampfes die Verbindungsstelle stromauf des Endes des ersten Leitungselements angeordnet ist. Beispielsweise erstreckt sich ein Längenbereich des ersten Leitungselements von der Verbindungsstelle bis zu dem Ende. Beispielsweise endet das erste Leitungselement an dem Ende, wobei es vorzugsweise vorgesehen ist, dass der Längenbereich an dem Ende endet. Da beispielsweise an der Verbindungsstelle die Druckluft aus dem zweiten Leitungselement in das erste Leitungselement und in den das erste Leitungselement durchströmenden Dampf eingeleitet werden kann, können beispielsweise der das erste Leitungselement durchströmende Dampf und die in das erste Leitungselement eingeleitete Druckluft, insbesondere gemeinsam, den genannten Längenbereich durchströmen und somit beispielsweise, insbesondere gemeinsam, von der Verbindungsstelle zu dem Ende des ersten Leitungselements strömen, das Ende des ersten Leitungselements durchströmen und somit über das Ende des ersten Leitungselements aus dem ersten Leitungselement ausströmen und hierdurch in oder an die genannte Umgebung strömen. Ist das Ende des ersten Leitungselements in die Milch eingetaucht, während der Dampf und die Druckluft das Ende durchströmt und somit über das Ende aus dem ersten Leitungselement ausströmen, so strömen der Dampf und die Luft, insbesondere gemeinsam, in die Milch, wodurch die Milch aufgeschäumt und insbesondere erhitzt wird. Dabei weist der aus dem Ende ausströmende Dampf beispielsweise eine Temperatur auf, welche größer als 90 Grad Celsius ist. Die Temperatur ist beispielsweise größer oder gleich 100 Grad Celsius.

Insbesondere strömt beispielsweise aus dem Ende ein Phasengemisch aus dem Dampf, Wassertröpfchen und der Luft aus, wobei das Phasengemisch, das aus dem Ende ausströmt, beispielsweise die genannte Temperatur aufweist, welche größer als 90 Grad Celsius ist, insbesondere größer oder gleich 100 Grad Celsius ist. Mit anderen Worten, das Ende des ersten Leitungselements ist zumindest von dem Dampf und von der Luft durchströmbar, um dadurch über das Ende den Dampf und die Luft in die Milch einzuleiten. Hierdurch kann die Milch aufgeschäumt werden, mithin kann hierdurch der Milchschaum erzeugt werden. Außerdem kann hierdurch die Milch erwärmt werden.

Um nun die Milch auf besonders einfache und somit beispielsweise auf besonders komfortable Weise aufschäumen zu können, weist die Vorrichtung erfindungsgemäß eine beispielsweise auch als Steuergerät bezeichnete, elektronische Recheneinrichtung auf, welche beispielsweise auch als Steuer- und/oder Regeleinrichtung bezeichnet wird oder als Steuer- und/oder Regeleinrichtung ausgebildet ist. Die elektronische Recheneinrichtung der erfindungsgemäßen Vorrichtung ist dazu ausgebildet, die Luftpumpe, insbesondere elektrisch und/oder elektronisch, anzusteuern und dadurch einen Betrieb der Luftpumpe zu variieren, das heißt einzustellen, um dadurch eine Menge der das zweite Leitungselement durchströmenden Luft und/oder den Druck der Luft in wenigstens einem der Leitungselemente, insbesondere in dem zweiten Leitungselement, zu variieren, das heißt einzustellen. Unter dem elektrischen und/oder elektronischen Ansteuern der Luftpumpe durch die elektronische Recheneinrichtung ist insbesondere zu verstehen, dass die elektronische Recheneinrichtung wenigstens ein auch als Ansteuersignal bezeichnetes, elektrisches Signal zum Ansteuern der Luftpumpe bereitstellen kann oder bereitstellt, welches von der Luftpumpe empfangen werden kann oder empfangen wird. Mittels des Ansteuersignals wird oder ist die Luftpumpe angesteuert oder ansteuerbar. Unter dem Variieren des Betriebs der Luftpumpe ist beispielsweise zu verstehen, dass durch das Ansteuern der Luftpumpe die Luftpumpe während einer ersten Zeitspanne in einem ersten Betriebszustand und während einer sich beispielsweise zeitlich an die erste Zeitspanne anschließenden oder der ersten Zeitspanne zeitlich vorweggehenden, zweiten Zeitspanne in einem von dem ersten Betriebszustand unterschiedlichen, zweiten Betriebszustand betrieben wird. Unter der das zweite Leitungselement durchströmenden Menge der einfach auch als Luft bezeichneten Druckluft ist insbesondere eine pro Zeiteinheit das zweite Leitungselement, insbesondere einen Strömungsquerschnitt des zweiten Leitungselements, durchströmende Menge der Druckluft zu verstehen. Beispielsweise kann unter der Menge der das zweite Leitungselement durchströmenden Luft ein Volumen- und/oder Massenstrom der Luft verstanden werden. Durch das Variieren des Betriebs der Luftpumpe, deren Betrieb durch das Ansteuern der Luftpumpe variiert werden kann, kann die Menge, das heißt der Volumen- und/oder Massenstrom, der das zweite Leitungselement durchströmenden Druckluft variiert, das heißt beispielsweise auf wenigstens zwei voneinander unterschiedliche und insbesondere jeweils gegenüber null größere Werte eingestellt werden, sodass beispielsweise eine die Menge der das zweite Leitungselement durchströmenden Luft charakterisierende Größe in dem ersten Betriebszustand oder während des ersten Betriebszustands einen ersten Mengenwert und in dem zweiten Betriebszustand oder während des zweiten Betriebszustands einen von dem ersten Mengenwert unterschiedlichen, zweiten Mengenwert aufweist. Dabei ist es vorzugsweise vorgesehen, dass die Mengenwerte jeweils größer als null sind. Demzufolge kann beispielsweise alternativ oder zusätzlich durch das Variieren des Betriebs der Luftpumpe der Druck der Druckluft in dem wenigstens einen Leitungselement, insbesondere in dem zweiten Leitungselement, variiert, das heißt eingestellt werden, sodass beispielsweise eine Größe, die den Druck der Druckluft in dem wenigstens einen Leitungselement, insbesondere in dem zweiten Leitungselement, charakterisiert, in dem ersten Betriebszustand oder während des ersten Betriebszustands einen ersten Druckwert und in dem zweiten Betriebszustand oder während des zweiten Betriebszustands einen von dem ersten Druckwert unterschiedlichen, zweiten Druckwert aufweist, wobei vorzugsweise die Druckwerte jeweils größer als null sind. Ferner ist es denkbar, dass die Luftpumpe, insbesondere deren auch als Betriebspunkt bezeichneter Arbeitspunkt, entsprechend einer Kennlinie der Pumpe eingestellt wird.

Im Vergleich zu herkömmlichen Lösungen, bei denen die Luftpumpe stets gleich betrieben wird und der Druck der Druckluft und/oder die Menge der Druckluft beispielsweise von einer Person manuell eingestellt werden muss, wobei zum Einstellen des Drucks der Druckluft und/oder der Menge der Druckluft ein von der Person manuell betätigbares Bedienelement vorgesehen ist, wird bei der Erfindung der Betrieb der Luftpumpe mittels der elektronischen Recheneinrichtung insbesondere beispielsweise in Abhängigkeit von wenigstens einer Eingabe einer Person variiert, sodass durch das Variieren des Betriebs der Luftpumpe die Menge der Druckluft und/oder der Druck der Druckluft variiert wird. Dadurch kann beispielsweise ein manuell zu bedienendes Bedienelement entfallen. Ferner kann der Druck der Druckluft und/oder die Menge der Druckluft präzise und insbesondere komfortabel beziehungsweise automatisch oder automatisiert eingestellt werden. Unter der genannten Eingabe der Person ist beispielsweise eine durch die Person bewirkte Eingabe in die Vorrichtung zu verstehen, wobei die durch die Person bewirkte Eingabe beispielsweise mittels eines Erfassungselements der Vorrichtung erfassbar ist oder erfasst wird. Somit kann die Vorrichtung beispielsweise das genannte Erfassungselement umfassen. Beispielsweise ist oder umfasst das Erfassungselement ein von der Person bedienbares Bedienelement, mittels welchem die Person die Eingabe in die Vorrichtung bewirken kann. Durch die Eingabe kann die Person beispielsweise eine gewünschte Temperatur der Milch und/oder eine Menge des Milchschaums, mithin einen Aufschäumungsgrad angeben. Insbesondere steuert beispielsweise die elektronische Recheneinrichtung die Luftpumpe in Abhängigkeit von der Eingabe an. Insbesondere ist es denkbar, dass dadurch in Abhängigkeit von unterschiedlichen Eingaben die elektronische Recheneinrichtung die Pumpe unterschiedlich ansteuert, wodurch der Betrieb der Pumpe variiert wird. Dies bedeutet beispielsweise, dass beispielsweise dann, wenn mittels des Erfassungselements eine erste, durch eine Person bewirkte Eingabe in die Vorrichtung erfasst wird, die elektronische Recheneinrichtung die Pumpe in Abhängigkeit von der ersten Eingabe, beispielsweise auf eine erste Art, ansteuert, wodurch beispielsweise die Pumpe in dem ersten Betriebszustand betrieben wird. Wird beispielsweise mittels des Erfassungselements eine von der ersten Eingabe unterschiedliche, zweite, durch eine Person bewirkte Eingabe in die Vorrichtung erfasst, so steuert dann beispielsweise die elektronische Recheneinrichtung die Pumpe in Abhängigkeit von der zweiten Eingabe, insbesondere auf eine von der ersten Art unterschiedliche, zweite Art, an, wodurch beispielsweise die Pumpe in dem zweiten Betriebszustand betrieben wird. Hierdurch kann ein einfaches, komfortables und bedarfsgerechtes Aufschäumen und beispielsweise Erhitzen der Milch realisiert werden. Die jeweilige, erfasste oder erfassbare Eingabe charakterisiert beispielsweise eine auch als Schaummenge oder Milchschaummenge bezeichnete Menge des zu erzeugenden Milchschaums und/oder eine auch als Schaumqualität oder Milchschaumqualität bezeichnete Qualität des zu erzeugenden Milchschaums. Das Bedienelement kann eine berührungsempfindliche Oberfläche sein oder umfassen, wobei die berührungsempfindliche Oberfläche beispielsweise Bestandteil einer auch als Bildschirm oder Display bezeichneten, elektrischen Anzeige der Vorrichtung sein kann, sodass vorzugsweise der Bildschirm als ein berührungsempfindliche Bildschirm ausgebildet ist, welcher auch als Touchscreen bezeichnet wird. Ferner ist es denkbar, dass das Bedienelement ein mechanisches Bedienelement ist, welches insbesondere relativ zu einem Basiselement der Vorrichtung zwischen wenigstens zwei voneinander unterschiedlichen Stellungen, insbesondere rotatorisch und/oder translatorisch, bewegbar ist. Die Person kann das Bedienelement beispielsweise durch Berühren des Bedienelements bedienen. Beispielsweise kann die Person durch Berühren und insbesondere durch Betätigen des Bedienelements das Bedienelement aus einer der Stellungen in die andere Stellung relativ zu dem Basiselement bewegen und hierdurch die Eingabe vornehmen, das heißt bewirken.

Durch das Ansteuern der Pumpe kann die elektronische Recheneinrichtung einen jeweiligen, auch als Betriebspunkt bezeichneten Arbeitspunkt der Pumpe einstellen. Somit wird beispielsweise durch Variieren des Betriebs der Pumpe der Betriebspunkt der Pumpe variiert, sodass die Pumpe in voneinander unterschiedlichen, auch als Arbeitspunkte bezeichneten Betriebspunkten betrieben werden kann. Dabei kann durch das Ansteuern der Pumpe der jeweilige Betriebspunkt der Pumpe eingestellt werden. Beispielsweise in Abhängigkeit von der Eingabe wird, insbesondere durch die elektronische Recheneinrichtung, der Arbeitspunkt der Pumpe so eingestellt beziehungsweise einer der Arbeitspunkte der Pumpe derart eingestellt, dass die Druckluft gegen den das erste Leitungselement durchströmenden Dampf ankommt, mithin dass die Druckluft gegen einen auch als Dampfdruck bezeichneten Druck des das erste Leitungselement durchströmenden Dampfes, insbesondere an der Verbindungsstelle, in das erste Leitungselement einströmt. Wieder mit anderen Worten ausgedrückt wird, insbesondere mittels der elektronischen Recheneinrichtung, der Arbeitspunkt der Pumpe so eingestellt oder gewählt beziehungsweise, insbesondere mittels der elektronischen Recheneinrichtung, wird einer der Arbeitspunkte der Pumpe derart eingestellt, dass der auch als Luftdruck bezeichnete Druck der Druckluft hinreichend hoch ist, sodass die Druckluft, insbesondere an der Verbindungsstelle, gegen den das erste Leitungselement durchströmenden Dampf und insbesondere gegen den Dampfdruck in das erste Leitungselement einströmt. Beispielsweise ist der Dampfdruck, insbesondere gegenüber dem Atmosphären- beziehungsweise Umgebungsdruck, größer als 1,5 bar, wobei beispielsweise der Dampfdruck, insbesondere gegenüber dem Atmosphären- beziehungsweise Umgebungsdruck, 2 bar beträgt.

Insbesondere wird beispielsweise der Arbeitspunkt der Luftpumpe insbesondere mittels der elektronischen Recheneinrichtung derart eingestellt oder, insbesondere mittels der elektronischen Recheneinrichtung, wird eine der Arbeitspunkte derart eingestellt, dass daraus die Menge der Druckluft und/oder der Druck der Druckluft derart resultieren, dass der erzeugte Milchschaum eine insbesondere durch die Eingabe der Person charakterisierte Menge und/oder Qualität aufweist, mithin dass es zu einer insbesondere durch die Eingabe charakterisierten Menge und/oder Qualität des Milchschaums kommt. Beispielsweise wird mittels der elektronischen Recheneinrichtung der Betrieb der Luftpumpe innerhalb oder während eines auch als Betriebsvorgang bezeichneten Arbeitsvorgangs der Luftpumpe und somit während eines Zeitintervalls variiert, während welchem der Betriebsvorgang der Luftpumpe unterbrechungsfrei, das heißt durchgängig, stattfindet, das heißt dass die Luftpumpe während des Zeitintervalls durchgängig, das heißt unterbrechungsfrei, betrieben wird und somit durchgängig beziehungsweise unterbrechungsfrei die Druckluft bereitstellt. Hierdurch kann zum einen sichergestellt werden, dass der auch als Luftdruck bezeichnete Druck der Druckluft hinreichend hoch ist, sodass die Druckluft insbesondere an der Verbindungsstelle in das erste Leitungselement einströmt, und es kann sichergestellt werden, dass der Milchschaum, welcher durch den Betriebsvorgang erzeugt wird, mit einer gewünschten und dabei beispielsweise durch die Eingabe charakterisierten Qualität und/oder Menge erzeugt wird. Dies kann durch die Erfindung sichergestellt werden, ohne dass die Person den Luftdruck oder die Menge der Druckluft manuell justieren muss. Mit anderen Worten kann durch die Erfindung eine manuelle Justage des Luftdrucks oder der Menge der Druckluft vermieden werden. Dadurch kann beispielsweise für eine Person der Milchschaum besonders einfach und komfortabel erzeugt werden, und es kann auf manuelle Bedienelemente verzichtet werden, wodurch die Kosten, der Bauraumbedarf und das Gewicht der Vorrichtung in einem besonders geringen Rahmen gehalten werden können.

Die erfindungsgemäße Vorrichtung wird auch als Aufschäumvorrichtung oder Milchaufschäumvorrichtung bezeichnet und kann beispielsweise Bestandteil eines Heißgetränkebereiters sein. Bei dem Heißgetränkebereiter kann es sich vorzugsweise um eine Siebträger-Maschine oder um einen Heißgetränke-Vollautomaten, insbesondere einen Kaffee-Vollautomaten, handeln. Ferner ist es denkbar, dass die Vorrichtung ein eigenständiger Milchschäumer, das heißt ein sogenannter Standalone-Milchschäumer, mithin ein Standalone-Gerät, ist. Der Erfindung liegen insbesondere die Erkenntnisse und Überlegungen zugrunde, dass an sogenannten Milchschaum-Lanzen insbesondere im sogenannten Barista-Style, ein Bediener oder eine Bedienerin ein gewisses handwerkliches Geschick aufweisen muss, um mittels der auch als Dampflanze bezeichneten Milchschaum-Lanze, aus welcher beispielsweise durch Dampf austritt, beim Aufschäumen von Milch mit dem Dampf zusätzlich Luft aus der Umgebung unter die Milch zu heben und durch geschicktes Anwinkeln und Anstellen der Dampflanze und eines beispielsweise als Kanne, insbesondere als Milchkanne, ausgebildeten Behältnisses, in welchem die Milch aufgenommen ist, eine ständige Durchmischung des beispielsweise als Milch-Luft-Gemisch ausgebildeten Milchschaums in der Milchkanne zu erreichen. Vor diesem Hintergrund ermöglicht es die Erfindung insbesondere, eine hinsichtlich des Aufschäumens von Milch nicht erfahrene und die Vorrichtung bedienende Person beim Aufschäumen der Milch zumindest zu unterstützen oder die Milch automatisch aufzuschäumen. Insbesondere ermöglicht es die Erfindung, den Milchschaum insbesondere hinsichtlich seiner Menge automatisiert herzustellen, mithin zu erzeugen.

Als besonders vorteilhaft hat es sich gezeigt, wenn die elektronische Recheneinrichtung dazu ausgebildet ist, durch das Ansteuern der Luftpumpe eine Versorgung der elektrischen Luftpumpe mit einer elektrischen Spannung zu variieren, um dadurch den Betrieb der Luftpumpe zu variieren. Hierdurch kann der Betrieb der Luftpumpe besonders präzise variiert werden, sodass der Milchschaum insbesondere hinsichtlich seiner Qualität und/oder Menge, die beispielsweise durch die Person durch die Eingabe eingestellt werden kann, präzise und insbesondere automatisiert erzeugen zu können.

Dabei hat es sich als besonders vorteilhaft gezeigt, wenn die elektrische Spannung eine elektrische Gleichspannung ist. Dadurch kann der Betrieb der Pumpe besonders präzise und bedarfsgerecht variiert werden.

Eine weitere Ausführungsform zeichnet sich dadurch aus, dass die elektronische Recheneinrichtung dazu ausgebildet ist, die Luftpumpe mittels Pulsweitenmodulation (PWM) anzusteuern, um dadurch den Betrieb zu variieren. Hierdurch kann der Betrieb besonders präzise, bedarfsgerecht und kostengünstig variiert werden. Die Ansteuerung der Luftpumpe per PWM hat sich insbesondere für Geräte für Endverbraucher als besonders vorteilhaft gezeigt.

In weiterer Ausgestaltung der Erfindung ist es vorgesehen, dass die elektronische Recheneinrichtung dazu ausgebildet ist, durch das Ansteuern der Luftpumpe eine Drehzahl der Luftpumpe, insbesondere eines Motors der Luftpumpe, und dadurch den Betrieb der Luftpumpe zu variieren. Hierdurch kann der Milchschaum insbesondere hinsichtlich seiner Menge und/oder Qualität besonders präzise und insbesondere in Abhängigkeit von der Eingabe erzeugt werden.

Um den Milchschaum hinsichtlich dessen Qualität und/oder Menge besonders vorteilhaft herstellen zu können, ist es in weiterer Ausgestaltung der Erfindung vorgesehen, dass die Luftpumpe eine von einer Zahnradpumpe unterschiedliche Luftpumpe ist. Es wurde gefunden, dass eine Zahnradpumpe eine zum Erzeugen von Druckluft und damit für Milchschaum ungeeignete Pumpenart ist.

Als weiterhin besonders vorteilhaft hat es sich gezeigt, wenn die Luftpumpe eine von einem Rotationsverdichter unterschiedliche Luftpumpe ist. Es wurde auch gefunden, dass ein Rotationsverdichter beziehungsweise eine Turbine eine zum Erzeugen von Milchschaum ungeeignete Pumpenart ist, sodass nun durch die Erfindung der Milchschaum insbesondere hinsichtlich dessen Qualität und/oder Menge vorteilhaft erzeugt werden kann.

Als weiterhin besonders vorteilhaft hat es sich gezeigt, wenn die Luftpumpe als eine Kolbenpumpe oder als eine Membranpumpe ausgebildet ist, wodurch der Milchschaum insbesondere hinsichtlich dessen Qualität und/oder Menge besonders vorteilhaft und insbesondere besonders bedarfsgerecht und dabei insbesondere in Abhängigkeit von der Eingabe erzeugt werden kann. Beispielsweise weist die Luftpumpe, insbesondere genau, zwei Ventile auf. Dies ist insbesondere dann vorteilhaft, wenn die Luftpumpe als eine Membranpumpe ausgebildet ist. Ferner ist es denkbar, dass insbesondere dann, wenn die Luftpumpe als eine Kolbenpumpe ausgebildet ist, wenigstens oder genau zwei versetzt zueinander arbeitende Kolben insbesondere zum Fördern der Luft aufweist.

Schließlich hat es sich als besonders vorteilhaft gezeigt, wenn die elektronische Recheneinrichtung dazu ausgebildet ist, die Luftpumpe durch das Ansteuern der Luftpumpe mittels eines geschlossenen Regelkreises zu regeln und dadurch den Betrieb zu variieren. Somit ist es bei der Erfindung vorzugsweise vorgesehen, die Luftpumpe zu regeln, wodurch der Milchschaum insbesondere hinsichtlich dessen Qualität und/oder Menge besonders vorteilhaft, insbesondere besonders bedarfsgerecht, erzeugt werden kann.

Die Luftpumpe weist beispielsweise eine Druck-Fluss-Kennlinie auf, die beispielsweise jeweiligen, mittels der Luftpumpe erzeugbaren Volumen- und/oder Massenströmend er Luft, insbesondere genau, einen jeweiligen, mittels der Luftpumpe bewirkbaren Druck der Luft zuordnen. Dabei ist es vorteilhafterweise vorgesehen, die Druck-Fluss-Kennlinie der Luftpumpe zu berücksichtigen, da die Luftpumpe die Luft gegen den Druck des Dampfes in dem ersten Leitungselement fördern und insbesondere in das erste Leitungselement hinein fördern muss. Dabei gelangt beispielsweise genau die Luftmenge am Arbeitspunkt der Pumpe bei zirka zwei Bar Dampfgegendruck in den Dampf und in der Folge in die Milch beziehungsweise den Milchschaum.

In weiterer Ausgestaltung der Erfindung kann die Vorrichtung eine Venturidüse oder eine Dampfstrahlpumpe aufweisen, wobei das zweite Leitungselement über die Venturidüse beziehungsweise über die Dampfstrahlpumpe in das erste Leitungselement mündet, sodass vorzugsweise die Venturidüse beziehungsweise die Dampfstrahlpumpe in dem zweiten Leitungselement angeordnet ist. Somit ist die Druckluft über die die Venturidüse beziehungsweise die Dampfstrahlpumpe in das erste Leitungselement einleitbar. Ein Vorteil ist dabei, dass Luftpumpen mit gefordertem Druck- und Mengenstrom meist kostenintensiv sind. Mittels der Venturidüse beziehungsweise der Dampfstrahlpumpe und insbesondere mittels des strömenden Dampfs kann an einer Stelle des auch als Luftleitung bezeichneten, zweiten Leitungselements, an dessen Stelle die die Venturidüse beziehungsweise die Dampfstrahlpumpe angeordnet ist, ein Unterdruck oder zumindest ein gegenüber dem Dampfdruck etwas niedrigerer Druck der Druckluft erzeugt werden. Somit kann als die Luftpumpe eine kosten-, bauraum und gewichtsgünstige Luftpumpe verwendet werden, die zwar immer noch einen geforderten oder gewünschten Volumen- und/oder Massenstrom der Druckluft erzeugen oder bereitstellen kann, jedoch auf einem vorteilhaft niedrigen Druckniveau oder auf einem niedrigeren Druckniveau als im Vergleich zu einer Variante, bei die genannte die Venturidüse beziehungsweise Dampfstrahlpumpe nicht verwendet würde.

Die Vorrichtung kann abhängig von der gewählten Luftpumpe mit oder ohne Venturidüse beziehungsweise Dampfstrahlpumpe zur Druckerniedrigung vorgesehen werden.

In weiterer, besonders vorteilhaft Ausgestaltung der Erfindung ist in dem zweiten Leitungselement ein Rückschlagventil angeordnet, welches, insbesondere selbststätig, das zweite Leitungselement für eine in Richtung der Luftpumpe erfolgende Strömung der Druckluft fluidisch versperrt und für eine entgegengesetzte, von der Luftpumpe wegweisende und insbesondere hin zu dem ersten Leitungselement verlaufende Strömung der Druckluft freigibt. Vorzugsweise ist das Rückschlagventil zwischen der Luftpumpe und der Venturidüse beziehungsweise Dampfstrahlpumpe angeordnet, mithin in Strömungsrichtung der das zweite Leitungselement durchströmenden Druckluft stromab der Luftpumpe und stromauf der Venturidüse beziehungsweise Dampfstrahlpumpe angeordnet. Dies ist insbesondere insofern vorteilhaft, als die Venturidüse beziehungsweise die Dampfstrahlpumpe bei einem ersten Dampfstoß noch keinen Unterdruck erzeugen kann, sondern erst langsam mit ihrer Arbeit im Hinblick auf das Erzeugen des Unterdrucks beziehungsweise auf die Druckminderung beginnt. Ziel ist es insbesondere, durch das Rückschlagventil die Luftpumpe vor dem heißen Dampf zu schützen.

Ein zweiter Aspekt der Erfindung betrifft einen Heißgetränkebereiter, welcher wenigstens eine Vorrichtung gemäß dem ersten Aspekt der Erfindung aufweist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ein dritter Aspekt der Erfindung betrifft auch ein Verfahren zum Aufschäumen von Milch mittels einer Vorrichtung, insbesondere gemäß dem ersten Aspekt der Erfindung. Bei dem Verfahren wird mittels einer Dampfquelle der Vorrichtung Dampf, insbesondere Wasserdampf, bereitgestellt. Beispielsweise weist der Dampf in der Dampfquelle eine Temperatur von mehr als 100 Grad Celsius auf. Insbesondere weist beispielsweise der Dampf in der Dampfquelle eine Temperatur auf, welche größer oder gleich oder geringer als 130 Grad Celsius ist. Die Dampfquelle ist dabei Bestandteil der Vorrichtung. Bei dem Verfahren weist die Vorrichtung ein erstes Leitungselement auf, welches von dem von der Dampfquelle bereitgestellten Dampf durchströmbar ist oder durchströmt wird. Das erste Leitungselement weist ein, insbesondere offenes, Ende auf, welches von dem Dampf aus der Dampfquelle durchströmbar ist oder durchströmt wird. Das Ende ist in ein zum Aufnehmen der Milch vorgesehenes Behältnis eintauchbar oder eingetaucht. Insbesondere ist während des Verfahrens das Ende in ein Behältnis eingetaucht, in welchem die Milch aufgenommen ist, insbesondere derart, dass das Ende in die Milch eingetaucht ist. Über das Ende ist der Dampf aus der Dampfquelle in die Milch einleitbar. Insbesondere ist es vorgesehen, dass bei dem Verfahren über das Ende der Dampf aus der Dampfquelle in die Milch eingeleitet wird. Bei dem Verfahren weist die Vorrichtung eine elektrisch betreibbare Luftpumpe auf, mittels welcher, insbesondere durch elektrisches Betreiben der Luftpumpe, Druckluft, die auch einfach als Luft bezeichnet wird, bereitgestellt wird. Bei dem Verfahren weist die Vorrichtung ein zweites Leitungselement auf, welches von der von der Luftpumpe bereitgestellten Druckluft durchströmbar ist oder durchströmt wird. Bei dem Verfahren wird über das zweite Leitungselement die Druckluft in das erste Leitungselement eingeleitet insbesondere an einer Verbindungsstelle, an welcher beispielsweise das zweite Leitungselement mit dem ersten Leitungselement fluidisch verbunden ist. Insbesondere mündet beispielsweise das zweite Leitungselement an der Verbindungsstelle in das erste Leitungselement. Das Ende ist oder wird sowohl von dem Dampf als auch von der Druckluft durchströmbar oder durchströmt, um dadurch über das Ende den Dampf und die Druckluft in die Milch einzuleiten. Dadurch ist oder wird die Milch aufschäumbar oder aufgeschäumt. Somit ist es beispielsweise vorgesehen, dass bei dem Verfahren über das Ende der Dampf und die Druckluft, die das Ende durchströmen, in die Milch eingeleitet werden, wodurch aus der Milch der Milchschaum erzeugt wird.

Um nun den Milchschaum besonders vorteilhaft, insbesondere für eine die Vorrichtung bedienende Person besonders einfach und komfortabel, erzeugen zu können, ist es bei dem Verfahren vorgesehen, dass mittels einer elektronischen Recheneinrichtung, insbesondere der Vorrichtung, die Luftpumpe, insbesondere elektrisch, angesteuert und dadurch ein Betrieb der Luftpumpe variiert wird, wodurch eine beispielsweise als Volumenstrom und/oder Massenstrom ausgebildete Menge der das zweite Leitungselement durchströmenden Druckluft und/oder einen auch als Luftdruck bezeichneten Druck der Druckluft in wenigstens einem der Leitungselemente, insbesondere in dem zweiten Leitungselement, variiert wird. Vorteile und vorteilhafte Ausgestaltungen des ersten Aspekts und des zweiten Aspekts der Erfindung sind als Vorteile und vorteilhafte Ausgestaltungen des dritten Aspekts der Erfindung anzusehen und umgekehrt.

Beispielsweise ist es vorgesehen, dass mittels der elektronischen Recheneinrichtung der Betrieb der Pumpe variiert wird, während die Pumpe, insbesondere durchgängig und somit unterbrechungsfrei, die Luft fördert und/oder während mittels der Vorrichtung, insbesondere durchgängig und somit unterbrechungsfrei, der Milchschaum erzeugt wird. Insbesondere ist es vorgesehen, dass während des Betriebs, der mittels der elektronischen Recheneinrichtung durch das Ansteuern der Pumpe variiert wird, die Pumpe, insbesondere durchgängig, betrieben wird, mithin, insbesondere durchgängig, aktiviert ist. Beispielsweise weist die Vorrichtung wenigstens ein Bedienelement auf, mittels welchem beispielsweise wenigstens eine durch eine Person bewirkte Eingabe in die Vorrichtung erfasst wird. Beispielsweise werden mittels des Bedienelements wenigstens zwei durch eine Person bewirkte Eingaben in die Vorrichtung erfasst. Dabei ist es insbesondere vorgesehen, dass mittels der elektronischen Recheneinrichtung der Betrieb der Pumpe in Abhängigkeit von der wenigstens einen Eingabe, insbesondere in Abhängigkeit von den wenigstens zwei Eingaben, variiert wird. Beispielsweise wird die Luftpumpe während einer ersten Zeitspanne mittels der elektronischen Recheneinrichtung in Abhängigkeit von einer ersten der Eingaben betrieben, indem die elektronische Recheneinrichtung die Pumpe in Abhängigkeit von der ersten Eingabe ansteuert, wodurch beispielsweise während der ersten Zeitspanne der Milchschaum, insbesondere auf eine erste Art, in Abhängigkeit von der ersten Eingabe erzeugt wird. Beispielsweise wird die Luftpumpe während einer zweiten Zeitspanne mittels der elektronischen Recheneinrichtung in Abhängigkeit von einer zweiten der Eingaben betrieben, indem die elektronische Recheneinrichtung die Luftpumpe in Abhängigkeit von der zweiten Eingabe ansteuert, wodurch beispielsweise während der zweiten Zeitspanne der Milchschaum, insbesondere auf eine von der ersten Art unterschiedliche, zweite Art, in Abhängigkeit von der zweiten Eingabe erzeugt wird. Dadurch kann der Milchschaum bedarfsgerecht, insbesondere in Abhängigkeit von der jeweiligen Eingabe, erzeugt werden, insbesondere je nach Wunsch der Person, wobei der Wunsch durch die jeweilige Eingabe charakterisiert wird. Insbesondere ist es möglich, den Milchschaum auf die unterschiedlichen Arten herzustellen, ohne dass die Person hinsichtlich der Erzeugung von Milchschaum erfahren ist. Insbesondere ist es denkbar, dass sich die Arten in einer jeweiligen Menge und/oder Qualität des Milchschaums voneinander unterscheiden. Somit kann beispielsweise die Person durch die erste Eingabe eine erste Menge und/oder eine erste Qualität des Milchschaums einstellen, und beispielsweise kann die Person durch die zweite Eingabe eine von der ersten Menge unterschiedliche, zweite Menge des Milchschaums und/oder eine von der ersten Qualität unterschiedliche, zweite Qualität des Milchschaums einstellen. Dadurch, dass beispielsweise die elektronische Recheneinrichtung die Luftpumpe in Abhängigkeit von der ersten Eingabe ansteuert, kann beispielsweise der Milchschaum mit der ersten Menge und/oder der ersten Qualität hergestellt werden. Dadurch, dass beispielsweise die elektronische Recheneinrichtung die Luftpumpe in Abhängigkeit von der zweiten Eingabe ansteuert, kann beispielsweise der Milchschaum mit der zweiten Qualität und/oder der zweiten Menge erzeugt, das heißt hergestellt werden.

Beispielsweise weist die Vorrichtung einen Drucksensor auf, mittels welchem der Druck der Druckluft in dem wenigstens einen Leitungselement, insbesondere in dem zweiten Leitungselement, erfassbar ist oder erfasst wird. Beispielsweise steuert die elektronische Recheneinrichtung die Luftpumpe in Abhängigkeit von dem mittels des Drucksensors erfassten, das heißt gemessenen, Druck der Druckluft an, sodass beispielsweise der Betrieb der Luftpumpe in Abhängigkeit von dem mittels des Drucksensors gemessenen Druck der Druckluft variierbar ist oder variiert wird. Insbesondere ist es denkbar, dass die Luftpumpe mittels der elektronischen Recheneinrichtung in Abhängigkeit von dem mittels des Drucksensors erfassten, das heißt gemessenen, Druck der Druckluft geregelt wird. Dafür kann es vorteilhaft sein, erforderlich eine Engstelle für die Luft vor ihrem Eintritt in den Dampf zu schaffen, da beispielsweise der Luftdruck in dem auch als Zuleitung bezeichneten zweiten Leitungselement dem Dampfdruck entspricht. Durch die Engstelle könnte der Druck der Druckluft Pumpe vom Dampfdruck entkoppelt werden, und es kann so ein Druckzustand der Luftpumpe bestimmt werden. Alternativ oder zusätzlich kann vorteilhafterweise ein insbesondere zusätzlich zu dem Drucksensor vorgesehener, zweiter Drucksensor vorgesehen sein, welcher auch als Dampfdrucksensor bezeichnet wird, wobei mittels des Dampfdrucksensors der Dampfdruck, insbesondere in dem ersten Leitungselement, erfassbar ist.

Alternativ oder zusätzlich kann die Vorrichtung einen auch als Mengensensor bezeichneten Luftmengensensor aufweisen, mittels welchen die das zweite Leitungselement durchströmende Menge der Druckluft erfassbar ist oder erfasst wird. Beispielsweise steuert die elektronische Recheneinrichtung die Luftpumpe in Abhängigkeit von der mittels des Luftmengensensors erfassten, das heißt gemessenen, auch als Luftmenge bezeichneten Menge der Luft an. Somit ist es beispielsweise vorgesehen, dass die elektronische Recheneinrichtung den Betrieb der Luftpumpe in Abhängigkeit von der mittels des Luftmengensensors erfassten Menge der Druckluft variiert. Ganz insbesondere kann vorgesehen sein, dass mittels der elektronischen Recheneinrichtung die Luftpumpe in Abhängigkeit von der mittels des Luftmengensensors erfassten, mithin gemessenen, Menge der Luft geregelt wird.

Ferner ist es denkbar, dass die Vorrichtung ein Rückschlagventil aufweist, welches beispielsweise in dem von der Druckluft durchströmbaren, zweiten Leitungselement angeordnet ist, insbesondere an der Verbindungsstelle. Mittels des Rückschlagventils kann beispielsweise, insbesondere selbstständig oder selbsttätig, ein Strömen, insbesondere ein Rückströmen, der Druckluft aus dem ersten Leitungselement in das zweite Leitungselement vermieden werden, sodass beispielsweise das Rückschlagventil das zweite Leitungselement für eine in Richtung der Luftpumpe erfolgende und beispielsweise von dem oder aus Richtung des ersten Leitungselements kommende Strömung der Druckluft, insbesondere selbstständig oder selbsttätig, fluidisch versperrt. Das Rückschlagventil gibt das zweite Leitungselement für eine von der Luftpumpe kommende und zu dem ersten Leitungselement hin verlaufende Strömung der Druckluft, insbesondere selbstständig oder selbsttätig, frei. Hierdurch können unerwünschte Strömungen der Druckluft einfach und bedarfsgerecht vermieden werden. Insbesondere kann durch das Rückschlagventil auf besonders einfache Weise vermieden werden, dass der Dampf aus dem ersten Leitungselement nicht zu der beispielsweise stehenden beziehungsweise deaktivierten Luftpumpe vordringen und diese unerwünscht beeinträchtigen kann.

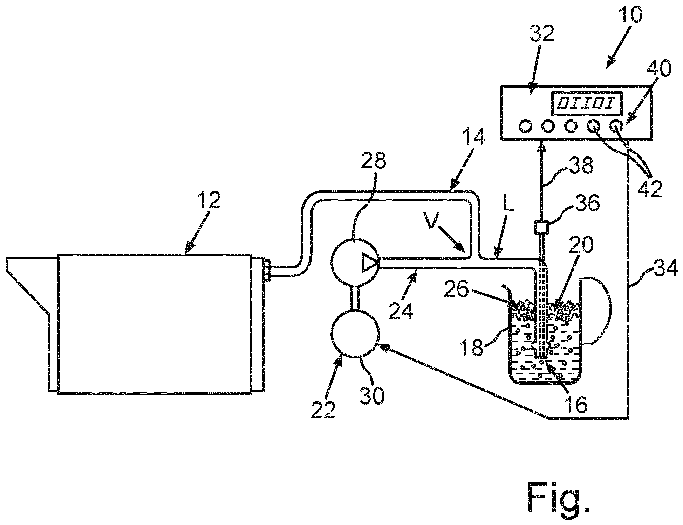

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Fig. eine schematische Darstellung einer Vorrichtung zum Aufschäumen von Milch.

Die einzige Fig. zeigt in einer schematischen Darstellung eine Vorrichtung 10 zum Aufschäumen von Milch, mithin zum Erzeugen oder Herstellen von Milchschaum aus der genannten Milch. Die Vorrichtung 10 weist eine Dampfquelle 12 zum Bereitstellen von Dampf, insbesondere Wasserdampf, auf. Beispielsweise ist die Dampfquelle 12 ein einfach auch als Boiler bezeichneter Dampfkessel oder ein Durchlauferhitzer zur Dampferzeugung. Die Vorrichtung 10 weist ein erstes Leitungselement 14 auf, welches von dem Dampf, mithin von dem von der Dampfquelle 12 bereitgestellten oder bereitstellbaren Dampf, durchströmbar ist. Das erste Leitungselement 14 weist ein, insbesondere offenes, Ende 16 auf, welches in ein zum Aufnehmen der Milch vorgesehenes und beispielsweise als Kanne, insbesondere als Milchkanne, ausgebildetes Behältnis 18 eintauchbar ist. In der Fig. ist in dem Behältnis 18 die in der Fig. besonders schematisch dargestellte und mit 20 bezeichnete Milch aufgenommen, wobei in der Fig. das Ende 16 des ersten Leitungselements 14 in das Behältnis 18 und dabei in die Milch 20, die in dem Behältnis 18 aufgenommen ist, eingetaucht ist. Das Ende 16 des ersten Leitungselements 14 ist von dem Dampf durchströmbar, sodass über das Ende 16 der Dampf in die Milch 20 einleitbar ist oder eingeleitet wird.

Die Vorrichtung 10 weist auch eine elektrisch betreibbare Luftpumpe 22 auf, welche auch einfach als Luftpumpe oder Pumpe bezeichnet wird. Mittels der Luftpumpe 22 ist oder wird Druckluft, die einfach auch als Luft bezeichnet wird, bereitstellbar oder bereitgestellt. Die Vorrichtung 10 weist außerdem ein zweites Leitungselement 24 auf, welches von der von der Luftpumpe 22 bereitstellbaren oder bereitgestellten Druckluft durchströmbar ist oder durchströmt wird. Über das zweite Leitungselement 24 ist oder wird die Druckluft in das erste Leitungselement 14 einleitbar oder eingeleitet. Hierzu ist das zweite Leitungselement 24 an einer Verbindungsstelle V fluidisch mit dem ersten Leitungselement 14 verbunden oder verbindbar. Aus der Fig. ist erkennbar, dass ein sich von der Verbindungsstelle V, insbesondere durchgängig, zu dem Ende 16 erstreckender und das Ende 16 aufweisender Längenbereich L des ersten Leitungselements 14 von dem Dampf aus der Dampfquelle 12 und von der mittels der Luftpumpe 22 geförderten Druckluft durchströmbar ist. Außerdem ist erkennbar, dass das Leitungselement 14 und der Längenbereich L an dem Ende 16 enden. Somit ist das Ende 16 sowohl von dem Dampf als auch von der Druckluft durchströmbar, sodass über das Ende 16 sowohl der Dampf als auch die Druckluft in die Milch 20 eingeleitet werden oder einleitbar sind, um dadurch den in der Fig. mit 26 bezeichneten Milchschaum zu erzeugen, mithin herzustellen. Mit anderen Worten ist das Ende 16 sowohl von dem Dampf als auch von der Druckluft durchströmbar, um dadurch über das Ende 16 den Dampf und die Druckluft in die Milch 20 einzuleiten und in der Folge den Milchschaum 26 zu erzeugen, mithin herzustellen.

Bei dem in der Fig. gezeigten Ausführungsbeispiel weist die Luftpumpe 22 beispielsweise ein Förderelement 28 auf, welches beispielsweise in einem in der Fig. nicht näher dargestellten, auch als Gehäuse bezeichneten Pumpengehäuse der Luftpumpe 22 bewegbar aufgenommen ist. Dies bedeutet, dass das Förderelement 28 relativ zu dem Pumpengehäuse bewegbar ist. Durch relativ zu dem Pumpengehäuse erfolgendes Bewegen des Förderelements 28 ist oder wird mittels der Luftpumpe 22 die Druckluft bereitgestellt. Die Luftpumpe 22 weist außerdem einen einfach auch als Motor bezeichneten Elektromotor 30 auf, mittels welchem das Förderelement 28 antreibbar und dadurch relativ zu dem Pumpengehäuse bewegbar ist, um dadurch die Druckluft zu fördern und bereitzustellen. Der Elektromotor 30 ist elektrisch betreibbar, sodass durch elektrisches Betreiben des Elektromotors 30 die Luftpumpe 22 elektrisch betrieben und das Förderelement 28 elektrisch angetrieben wird. Hierdurch wird die Druckluft bereitgestellt. Der Elektromotor 30 weist beispielsweise einen Stator und einen Rotor auf, welcher insbesondere durch elektrisches Betreiben des Elektromotors 30 mittels des Schalters antreibbar und dadurch um eine Maschinendrehachse relativ zu dem Stator drehbar ist oder gedreht wird. Somit kann der Rotor durch Antreiben des Rotors mit einer jeweiligen Drehzahl um die Maschinendrehachse relativ zu dem Stator und insbesondere relativ zu dem Pumpengehäuse gedreht werden. Die Luftpumpe 22 kann eine beispielsweise als Volumen- und/oder Massenstrom ausgebildete Menge der das Leitungselement 24 durchströmenden Druckluft erzeugen, das heißt bewirken. Außerdem kann beispielsweise die Luftpumpe 22 einen auch als Luftdruck bezeichneten Druck der Druckluft bewirken, das heißt erzeugen. Die Menge und/oder der Luftdruck hängen dabei beispielsweise von der Drehzahl des Rotors, mithin der Luftpumpe 22, ab.

Um nun den Milchschaum 26 auf besonders einfache und insbesondere komfortable Weise erzeugen, mithin herstellen, zu können, weist die Vorrichtung 10 eine auch als Steuergerät bezeichnete, elektronische Recheneinrichtung 32 auf, welche dazu ausgebildet ist, die Luftpumpe 22, insbesondere elektrisch, anzusteuern und dadurch einen Betrieb der Luftpumpe 22 zu variieren, um hierdurch die Menge der das zweite Leitungselement 24 durchströmenden Druckluft und/oder den Druck der Druckluft in wenigstens einem der Leitungselemente 14, 24, insbesondere dem zweiten Leitungselement 24, zu variieren. Das, insbesondere elektrische, Ansteuern der Luftpumpe 22 durch die elektronische Recheneinrichtung 32 ist in der Fig. durch einen Pfeil 34 veranschaulicht. Beispielsweise kann die Recheneinrichtung 32 wenigstens ein, insbesondere elektrisches, auch als Ansteuersignal bezeichnetes Signal bereitstellen, mittels welchem die Luftpumpe 22 ansteuerbar ist oder angesteuert wird. Insbesondere kann die Luftpumpe 22 das Ansteuersignal empfangen, wodurch die elektronische Recheneinrichtung 32 mittels des Ansteuersignals die Luftpumpe 22 ansteuern, insbesondere regeln, kann. Beispielsweise kann die elektronische Recheneinrichtung 32 durch das Ansteuern der Luftpumpe 22 eine Versorgung der Luftpumpe 22, insbesondere des Elektromotors 30, mit einer beispielsweise als elektrische Gleichspannung ausgebildeten, elektrischen Spannung variieren, um dadurch den Betrieb der Luftpumpe 22 zu variieren. Ferner ist es denkbar, dass die elektronische Recheneinrichtung 32 die Luftpumpe 22 mittels Pulsweitenmodulation ansteuern kann, um dadurch den Betrieb der Luftpumpe 22 zu variieren. Insbesondere kann beispielsweise die elektronische Recheneinrichtung 32 durch das Ansteuern der Luftpumpe 22 die Drehzahl der Luftpumpe 22 und dadurch den Betrieb der Luftpumpe 22 variieren. Vorzugsweise ist die Luftpumpe 22 eine von einer Zahnradpumpe, von einer Turbine und von einem Rotationsverdichter unterschiedliche Luftpumpe, wobei vorzugsweise die Luftpumpe 22 als eine Kolbenpumpe oder als eine Membranpumpe ausgebildet ist. Ganz vorzugsweise ist die elektronische Recheneinrichtung 32 dazu ausgebildet, die Luftpumpe 22 durch das Ansteuern der Luftpumpe 22 mittels eines geschlossenen Regelkreises zu regeln und dadurch den Betrieb der Luftpumpe 22 zu variieren.

Die Vorrichtung 10 weist beispielsweise eine in der Fig. besonders schematisch dargestellte Sensoreinrichtung 36 auf, mittels welcher beispielsweise der auch als Luftdruck bezeichnete Druck der Druckluft in dem Leitungselement 14, insbesondere in dem Längenbereich L, und/oder in dem Leitungselement 24 erfasst, das heißt gemessen, werden kann. Alternativ oder zusätzlich kann beispielsweise mittels der Sensoreinrichtung 36 die auch als Luftmenge bezeichnete Menge der das Leitungselement 24 und/oder das Leitungselement 14, insbesondere den Längenbereich L, durchströmenden Luft erfasst, das heißt gemessen, werden. In der Fig. ist durch einen Pfeil 38 schematisch veranschaulicht, dass beispielsweise die Sensoreinrichtung 36 ein, insbesondere elektrisches, Messsignal bereitstellen kann. Das Messsignal charakterisiert beispielsweise den mittels der Sensoreinrichtung 36 gemessenen Druck und/oder die mittels der Sensoreinrichtung 36 gemessene Menge. Die elektronische Recheneinrichtung 32 kann das Messsignal empfangen. In der Folge kann beispielsweise die elektronische Recheneinrichtung 32 die Luftpumpe 22 in Abhängigkeit von dem Messsignal, mithin in Abhängigkeit von dem gemessenen Druck und/oder in Abhängigkeit von der gemessenen Menge, ansteuern, insbesondere regeln, um dadurch den Betrieb der Luftpumpe 22 zu variieren.

Bei dem in der Fig. gezeigten Ausführungsbeispiel weist die Vorrichtung 10 eine Bedieneinrichtung 40 auf, welche wenigstens ein Bedienelement 42 aufweist. Bei dem in der Fig. gezeigten Ausführungsbeispiel umfasst die Bedieneinrichtung 40 mehrere Bedienelemente 42. Das jeweilige Bedienelement 42 ist beispielsweise von einer Person bedienbar, um hierdurch wenigstens eine Eingabe, insbesondere wenigstens zwei oder demgegenüber mehr Eingaben, in die Vorrichtung 10 bewirken, das heißt vornehmen zu können. Dies bedeutet, dass mittels der Bedienelemente 42, das heißt mittels der Bedieneinrichtung 40, die durch die Person bewirkten oder bewirkbaren Eingaben erfasst werden können. Die elektronische Recheneinrichtung 32 kann die Luftpumpe 22 in Abhängigkeit von den Eingaben ansteuern und dadurch den Betrieb der Luftpumpe 22 in Abhängigkeit von den Eingaben variieren, sodass der Milchschaum 26 insbesondere hinsichtlich dessen Menge und/oder Qualität in Abhängigkeit von den Eingaben und somit auf unterschiedliche Arten erzeugt, mithin hergestellt werden kann. Beispielsweise wird dadurch, dass die elektronische Recheneinrichtung 32 die Luftpumpe 22 in Abhängigkeit von einer ersten der Eingaben ansteuert, der Milchschaum 26 mit einer ersten Menge und/oder einer ersten Qualität hergestellt. Mit anderen Worten werden beispielsweise in Abhängigkeit von der ersten Eingabe eine erste Menge und/oder eine erste Qualität des Milchschaums 26 erzeugt, das heißt hergestellt. Beispielsweise wird dadurch, dass die elektronische Recheneinrichtung 32 die Luftpumpe 22 in Abhängigkeit von einer zweiten der Eingaben ansteuert, der Milchschaum 26 mit einer von der ersten Menge unterschiedlichen, zweiten Menge und/oder mit einer von der ersten Qualität unterschiedlichen, zweiten Qualität hergestellt. Mit anderen Worten wird beispielsweise in Abhängigkeit von der zweiten Eingabe eine von der ersten Menge unterschiedliche, zweite Menge und/oder eine von der ersten Qualität unterschiedliche, zweite Qualität des Milchschaums 26 hergestellt. Dadurch kann der Milchschaum 26 automatisiert auf unterschiedliche Arten hergestellt werden.

## Patentansprüche

1. Vorrichtung (10) zum Aufschäumen von Milch (20), mit:
- einer Dampfquelle (12) zum Bereitstellen von Dampf;
- einem von dem Dampf durchströmbaren, ersten Leitungselement (14), welches ein in ein zum Aufnehmen der Milch (20) vorgesehenes Behältnis (18) eintauchbares und von dem Dampf durchströmbares Ende (16) aufweist, über welches der Dampf in die Milch (20) einleitbar ist;
- einer elektrisch betreibbaren Luftpumpe (22) zum Bereitstellen von Druckluft; und
- einem von der Druckluft durchströmbaren, zweiten Leitungselement (24), über welches die Druckluft in das erste Leitungselement (14) einleitbar ist, dessen Ende (16) von dem Dampf und von der Druckluft durchströmbar ist, um dadurch zum Aufschäumen der Milch über das Ende (26) den Dampf und die Druckluft in die Milch (20) einzuleiten;
**gekennzeichnet durch**
eine elektronische Recheneinrichtung (32), welche dazu ausgebildet ist, die Luftpumpe (22) anzusteuern und dadurch einen Betrieb der Luftpumpe (22) zu variieren, um dadurch eine Menge der das zweite Leitungselement (24) durchströmenden Druckluft und/oder einen Druck der Druckluft in wenigstens einem der Leitungselemente (14, 24) zu variieren.

2. Vorrichtung (10) nach Anspruch 1,
**dadurch gekennzeichnet, dass**
die elektronische Recheneinrichtung (32) dazu ausgebildet ist, durch das Ansteuern der Luftpumpe (22) eine Versorgung der elektrischen Luftpumpe (22) mit einer elektrischen Spannung zu variieren, um dadurch den Betrieb der Luftpumpe (22) zu variieren.

3. Vorrichtung (10) nach Anspruch 2,
**dadurch gekennzeichnet, dass**
die elektrische Spannung eine elektrische Gleichspannung ist.

4. Vorrichtung (10) nach einem der vorhergehenden Ansprüche,
**dadurch gekennzeichnet, dass**
die elektronische Recheneinrichtung (32) dazu ausgebildet ist, die Luftpumpe (22) mittels Pulsweitenmodulation anzusteuern.

5. Vorrichtung (10) nach einem der vorhergehenden Ansprüche,
**dadurch gekennzeichnet, dass**
die elektronische Recheneinrichtung (32) dazu ausgebildet ist, durch das Ansteuern der Luftpumpe (22) eine Drehzahl der Luftpumpe (22) und dadurch den Betrieb der Luftpumpe (22) zu variieren.

6. Vorrichtung (10) nach einem der vorhergehenden Ansprüche,
**dadurch gekennzeichnet, dass**
die Luftpumpe (22) eine von einem Rotationsverdichter unterschiedliche Luftpumpe ist.

7. Vorrichtung (10) nach einem der vorhergehenden Ansprüche,
**dadurch gekennzeichnet, dass**
die Luftpumpe (22) als eine Kolbenpumpe oder als eine Membranpumpe ausgebildet ist.

8. Vorrichtung (10) nach einem der vorhergehenden Ansprüche,
**dadurch gekennzeichnet, dass**
die elektronische Recheneinrichtung (32) dazu ausgebildet ist, die Luftpumpe (22) durch das Ansteuern der Luftpumpe (22) mittels eines geschlossenen Regelkreises zu regeln und dadurch den Betrieb zu variieren.

9. Heißgetränkebereiter, mit wenigstens einer Vorrichtung (10) nach einem der vorhergehenden Ansprüche.

10. Verfahren zum Aufschäumen von Milch (20) mittels einer Vorrichtung (10), bei welchem:
- mittels einer Dampfquelle (12) der Vorrichtung (10) Dampf bereitgestellt wird;
- ein erstes Leitungselement (14) der Vorrichtung (10) von dem Dampf durchströmt wird und ein in ein zum Aufnehmen der Milch (20) vorgesehenes Behältnis (18) eintauchbares und von dem Dampf durchströmtes Ende (16) aufweist, über welches der Dampf in die Milch (20) einleitbar ist;
- mittels einer elektrisch betreibbaren Luftpumpe (22) der Vorrichtung (10) Druckluft bereitgestellt wird; und
- ein zweites Leitungselement (24) der Vorrichtung (10) von der Druckluft durchströmt wird, welche über das zweite Leitungselement (24) in das erste Leitungselement (14) eingeleitet wird, dessen Ende (16) von dem Dampf und von der Druckluft durchströmt wird, um dadurch zum Aufschäumen der Milch über das Ende (26) den Dampf und die Druckluft in die Milch (20) einzuleiten;
**dadurch gekennzeichnet, dass**
mittels einer elektronischen Recheneinrichtung (32) die Luftpumpe (22) angesteuert und dadurch ein Betrieb der Luftpumpe (22) variiert, wodurch eine Menge der das zweite Leitungselement (24) durchströmenden Druckluft und/oder ein Druck der Druckluft in wenigstens einem der Leitungselemente (14, 24) variiert.
